# EUROPÄISCHE PATENTSCHRIFT

(11) **EP 3 313 678 B1**
(45) Veröffentlichungstag und Bekanntmachung des Hinweises auf die Patenterteilung: **17.04.2019**
(21) Anmeldenummer: 16731544.9
(22) Anmeldetag: 13.06.2016
(51) Int. Cl.: B60H 1/00, B60H 1/32

(54) **VERDAMPFEREINHEIT FÜR EINE AUFDACHKLIMAANLAGE EINES STRASSENFAHRZEUGS**
EVAPORATOR UNIT FOR A ROOFTOP AIR-CONDITIONING SYSTEM OF A ROAD-GOING VEHICLE
ENSEMBLE D'ÉVAPORATEURS POUR UN SYSTÈME DE CLIMATISATION SUR TOIT D'UN VÉHICULE ROUTIER

(30) Priorität: 23.06.2015 DE 102015211606
(43) Veröffentlichungstag der Anmeldung: 02.05.2018
(73) Patentinhaber: Mahle International GmbH, 70376 Stuttgart (DE)
(72) Erfinder: HIPP-KALTHOFF, 70192 Stuttgart (DE); KNORR, Hans-Henning, 73630 Remshalden (DE); RAHMAN, Nayyar, 61231 Bad Nauheim (DE); VOIGT, Klaus, 74321 Bietigheim-Bissingen (DE)
(74) Vertreter: BRP Renaud & Partner mbB Rechtsanwälte Patentanwälte Steuerberater
(86) Internationale Anmeldenummer: PCT/EP2016/063502
(87) Internationale Veröffentlichungsnummer: WO 2016/207010

(56) Entgegenhaltungen:
- WO-A1-2014/205799
- DE-A1- 19 505 403

## Beschreibung

Die vorliegende Erfindung betrifft eine Verdampfereinheit für eine Aufdachklimaanlage eines Straßenfahrzeugs mit den Merkmalen des Oberbegriffs des Anspruchs 1. Die Erfindung betrifft außerdem eine mit einer solchen Verdampfereinheit ausgestattete Aufdachklimaanlage für ein Straßenfahrzeug.

Klimaanlagen zum Klimatisieren eines Fahrzeuginnenraums sind allgemein bekannt. Eine solche Klimaanlage arbeitet mit wenigstens einem Kältekreis, in dem ein Kältemittel zirkuliert und in dem zumindest ein Verdampfer zum Verdampfen des Kältemittels, mindestens ein Kondensator zum Kondensieren des Kältemittels sowie wenigstens eine Fördereinrichtung zum Antreiben des Kältemittels im Kältemittelkreis angeordnet sind. Üblicherweise ist außerdem zumindest ein Expansionsventil vorhanden, um den Zustrom des unter Druck stehenden, flüssigen Kältemittels zum Verdampfer zu steuern. Mit Hilfe des Verdampfers, der als Wärmeübertrager ausgestaltet ist, kann ein Luftstrom gekühlt werden, der dem zu klimatisierenden Fahrzeuginnenraum zugeführt werden soll. Die hierbei dem Luftstrom entzogene Wärme kann über den Kondensator zum Beispiel einer Umgebung des Fahrzeugs zugeführt werden. Zweckmäßig ist hierzu auch der Kondensator als Wärmeübertrager ausgestaltet, der beispielsweise von einem Kühlluftstrom durchströmt wird, der die Wärme mitnimmt.

Während bei Personenkraftwagen die Klimaanlagen üblicherweise in das Fahrzeug integriert sind, ist bei Großraumfahrzeugen, wie zum Beispiel bei Nutzfahrzeugen, Omnibussen und dergleichen, auch eine externe Anbringung, nämlich bevorzugt auf einem Fahrzeugdach möglich. Dieser auf dem Fahrzeugdach montierte Teil der Klimaanlage wird als Aufdachklimaanlage bezeichnet.

Eine derartige Aufdachklimaanlage umfasst zumindest eine Verdampfereinheit, die in einem Gehäuse wenigstens einen Verdampfer aufweist. Das Gehäuse kann dabei beispielsweise ein Gehäuseunterteil sowie ein Gehäuseoberteil aufweisen. Im Gehäuse können außerdem zumindest ein Luftfilter und wenigstens ein Verdampfergebläse angeordnet sein. Der jeweilige Verdampfer dieser Verdampfereinheit ist wie vorstehend erläutert in einen Kältekreis eingebunden. Der zugehörige Kondensator kann grundsätzlich an jeder beliebigen anderen, geeigneten Stelle des Fahrzeugs angeordnet sein. Beispielsweise in einem Motorraum des Fahrzeugs bzw. in einem Raum des Fahrzeugs, in dem auch ein Hauptkühler eines Motorkühlkreises angeordnet ist. Insbesondere kann die Aufdachklimaanlage über den Kältekreis somit an einen ohnehin bereits am Fahrzeug vorhandenen Kondensator angeschlossen sein. Sofern die Aufdachklimaanlage mit einem eigenen Kondensator ausgestattet ist, umfasst sie außerdem eine Kondensatoreinheit, die zumindest einen Kondensator aufweist. Ferner kann ein Kondensatorgebläse vorgesehen sein. Zweckmäßig kann auch eine Lüfterzarge vorgesehen sein, die einen Strömungskanal definiert, der den Kondensator mit dem Kondensatorgebläse verbindet.

Ferner kann eine derartige Aufdachklimaanlage mit einer Haube ausgestattet sein, die zum Abdecken der Verdampfereinheit sowie gegebenenfalls zum Abdecken der Kondensatoreinheit dient.

Derartige Aufdachklimaanlagen besitzen eine vergleichsweise komplexe Struktur, so dass der Aufwand zum Herstellen sowie zum Montieren einer derartigen Aufdachklimaanlage am Fahrzeug vergleichsweise groß ist.

Eine Aufdachklimaanlage für ein Schienenfahrzeug ist beispielsweise aus der DE 10 2009 056 968 B3 bekannt. Sie besitzt ein kastenförmiges Gehäuse, in dem mehrere Verdampfereinheiten und mehrere Kondensatoreinheiten untergebracht sind, wobei ein Rahmen des Gehäuses Einlassöffnungen für die Verdampfer und Einlassöffnungen für die Kondensatoren aufweist. Ein auf den Rahmen aufgesetzter Deckel verschließt das Gehäuse.

Weitere Aufdachklimaanlagen für Straßenfahrzeuge sind auch aus der DE 10 2006 047 367 B4, DE 10 2012 018 272 A1 und aus der DE 10 2012 216 039 A1 bekannt. Sie zeichnen sich jeweils dadurch aus, dass zwei Verdampfereinheiten beiderseits einer mittig angeordneten Kondensatoreinheit angeordnet sind, so dass die Kondensatoreinheit bezüglich einer Fahrzeugquerrichtung zwischen den beiden Verdampfereinheiten angeordnet ist. Bei der DE 10 2012 216 039 A1 weisen die beiden Verdampfereinheiten jeweils ein Gehäuseunterteil auf, die jeweils an ein dazwischen angeordnetes Gehäuseunterteil der Kondensatoreinheit angebaut sind. Bei der DE 10 2006 047 367 B4 sind die Gehäuse für die Verdampfereinheiten und für die Kondensatoreinheit in der Fahrzeuglängsrichtung modular aufgebaut, so dass zwischen zwei Endmodulen eine variierende Anzahl an Zwischenmodulen angeordnet werden kann. Hierzu sind die Grundkörper der Gehäuse sowie die zugehörigen Klappen zum Verschließen der nach oben offenen Grundkörper in der Fahrzeuglängsrichtung aneinander fixierbar. Aus der DE 10 2012 018 272 A1 ist es bekannt, die Grundkörper der Gehäuse für die Verdampfereinheiten und die Kondensatoreinheit mit Hilfe von Hauben abzudecken, wobei die außen liegenden Hauben der seitlichen Verdampfereinheiten an der mittigen Haube der mittleren Kondensatoreinheit um eine parallel zur Fahrzeuglängsachse verlaufende Schwenkachse schwenkbar gelagert sind.

Je nach der erforderlichen Kälteleistung, die mit Hilfe der Aufdachklimaanlage geliefert werden soll, können zwei oder mehr Verdampfereinheiten oder innerhalb einer Verdampfereinheit zwei oder mehr Verdampfer zur Anwendung kommen. Dabei ist es üblich, zwei Verdampfereinheiten bezüglich einer Längsachse der Aufdachklimaanlage symmetrisch anzuordnen bzw. innerhalb einer Verdampfereinheit zwei Verdampfer bezüglich einer Längsachse der Aufdachklimaanlage symmetrisch anzuordnen.

Beispielsweise ist aus der DE 20 2008 002 054 U1 eine Aufdachklimaanlage bekannt, bei der in einer Querrichtung der Aufdachklimaanlage zwei Verdampfereinheiten und eine Kondensatoreinheit nebeneinander angeordnet sind, derart, dass die Kondensatoreinheit zwischen den beiden Verdampfereinheiten angeordnet ist. Jede der beiden Verdampfereinheiten ist dabei mit einem Verdampfer ausgestattet, der sich jeweils parallel zu einer Längsrichtung der Aufdachklimaanlage erstreckt. Die beiden Verdampfer sind dabei bezüglich einer parallel zur Längsrichtung der Aufdachklimaanlage verlaufenden Vertikalebene spiegelsymmetrisch angeordnet, derart, dass Anschlussleitungen für das Kältemittel bezüglich der Längsrichtung der Aufdachklimaanlage an der gleichen Seite und ebenfalls spiegelsymmetrisch angeordnet sind. Hierzu ist es erforderlich, die beiden spiegelbildlich angeordneten Verdampfer auch spiegelbildlich auszugestalten.

Dementsprechend müssen für derartige Aufdachklimaanlagen bzw. für deren Verdampfereinheiten zumindest zwei verschiedene Versionen des jeweiligen Verdampfers bereitgestellt werden. Der Herstellungsaufwand hierzu ist vergleichsweise groß. Beispielsweise müssen bei einer Serienfertigung zwei separate Fertigungsstraßen für die beiden Varianten der Verdampfer betrieben werden. Dies gilt insbesondere dann, wenn der jeweilige Verdampfer in der Durchströmungsrichtung des Luftstroms zwei Reihen von nebeneinander angeordneten Verdampfungsrohren aufweist, so dass diese Verdampfungsrohrreihen vom Luftstrom nacheinander durchströmt werden. Ferner ist bei einem derartigen Verdampfer üblicherweise vorgesehen, einen Einlassanschluss zum Zuführen von flüssigem Kältemittel mit der einen Verdampfungsrohrreihe und einen Auslassanschluss zum Abführen von gasförmigem Kältemittel mit der anderen Verdampfungsrohrreihe zu verbinden. In der Folge haben die Verdampfer bevorzugte Durchströmungsrichtungen für Kältemittel und Luft, um sie z.B. nach dem Gegenstromprinzip oder nach dem Gleichstromprinzip anzuordnen. Wenn bei zwei sich gegenüberliegenden Verdampfern dann die Anschlüsse an derselben Seite der Verdampfereinheit liegen sollen, ist eine spiegelsymmetrische Anordnung mit baugleichen Verdampfern nicht möglich.

Eine gattungsgemäße Verdampfereinheit gemäß Oberbegriff des Anspruchs 1 ist beispielsweise aus der WO 2014/205799 A1 bekannt. Sie besitzt ein Gehäuse, in dem zwei Verdampfer angeordnet sind, die jeweils mehrere parallel zueinander und parallel zu einer Z-Achse des Verdampfers verlaufende Verdampfungsrohre, einen parallel zu einer X-Achse des Verdampfers verlaufenden Verteiler- und Sammlerkasten und einen parallel zur X-Achse des Verdampfers verlaufenden Umlenkkasten aufweist, wobei sich die Verdampfungsrohre vom Verteiler- und Sammlerkasten zum Umlenckasten erstrecken, wobei der Verteiler- und Sammlerkasten einen Einlassanschluss für flüssiges Kältemittel und einen Auslassanschluss für gasförmiges Kältemittel aufweist, die an derselben Stirnseite des Verteiler- und Sammlerkastens und in einer Y-Achse des Verdampfers nebeneinander angeordnet sind, wobei die beiden Verdampfer beiderseits eines Ansaugraums der Verdampfereinheit und sich in einer Querachse der Verdampfereinheit gegenüberliegend angeordnet sind, und wobei die beiden Verdampfer baugleich ausgestaltet sind.

Die vorliegende Erfindung beschäftigt sich mit dem Problem, für eine Verdampfereinheit der vorstehend beschriebenen Art bzw. für eine damit ausgestattete Aufdachklimaanlage eine verbesserte Ausführungsform anzugeben, die sich insbesondere durch reduzierte Herstellungskosten auszeichnet.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die beiden Verdampfer baugleich auszugestalten. Durch baugleiche, also identische Verdampfer wird demnach auf die spiegelsymmetrische Ausgestaltung einer Variante des jeweiligen Verdampfers verzichtet, wodurch sich ein signifikanter Preisvorteil für den jeweiligen Verdampfer ergibt. Die Ausgestaltung der zum Einsatz kommenden Verdampfer als Gleichteile wird hierbei durch Verdampfer ermöglicht, die jeweils mehrere parallel zueinander und parallel zu einer Z-Achse des jeweiligen Verdampfers verlaufende Verdampfungsrohre, einen parallel zu einer X-Achse des jeweiligen Verdampfers verlaufenden Verteiler- und Sammlerkasten und einen parallel zur X-Achse des jeweiligen Verdampfers verlaufenden Umlenkkasten aufweisen. Die Verdampfungsrohre erstrecken sich dabei vom Verteiler- und Sammlerkasten zum Umlenkkasten. Von besonderer Bedeutung ist dabei, dass der Verteiler- und Sammlerkasten einen Einlassanschluss für flüssiges Kältemittel und einen Auslassanschluss für gasförmiges Kältemittel aufweist, wobei diese Anschlüsse an derselben Stirnseite des Verteiler- und Sammlerkastens, also bezüglich der X-Achse am selben Ende des Verteiler- und Sammlerkastens angeordnet sind. Außerdem sind die beiden Anschlüsse in einer Y-Achse des jeweiligen Verteilers nebeneinander angeordnet. Hierdurch sind Einlassanschluss und Auslassanschluss am jeweiligen Verdampfer unmittelbar nebeneinander angeordnet, was die Verwendung gleicher Verdampfer bei gegenüberliegender Anordnung vereinfacht. Im Gehäuse der Verdampfereinheit sind die beiden baugleichen Verdampfer beiderseits eines Ansaugraums der Verdampfereinheit angeordnet, und zwar derart, dass sie sich in einer Querachse der Verdampfereinheit gegenüberliegen. In diesen Ansaugraum tritt während des Betriebs der Verdampfereinheit ein zu kühlender Luftstrom ein, der sich dann aufteilt und durch die beiden Verdampfer strömt, so dass jeder Verdampfer einen der beiden Teilströme kühlt.

Besonders vorteilhaft ist dabei, dass sich auch Verdampfer mit zwei Verdampfungsrohrreihen verwenden lassen, da sich die Anschlüsse stirnseitig am Verteiler- und Sammlerkasten nebeneinander befinden und demensprechen einfach zugänglich sind. Somit kann bei beiden Verdampfern innerhalb der Verdampfereinheit dieselbe Durchströmungssituation für Luft und Kältemittel realisiert werden, z.B. beide Verdampfer sind nach dem Gleichstromprinzip oder bevorzugt nach dem Gegenstromprinzip angeordnet.

Bei einer vorteilhaften Ausführungsform kann der jeweilige Verdampfer dementsprechend eine anströmseitige Reihe von in der X-Achse nebeneinander angeordneten Verdampfungsrohren und eine abströmseitige Reihe von in der X-Achse nebeneinander angeordneten Verdampfungsrohren aufweisen. Ferner ist der jeweilige Verdampfer so aufgebaut, dass die anströmseitige Reihe und die abströmseitige Reihe in der X-Achse nebeneinander angeordnet sind. Im eingebauten Zustand ist dann die anströmseitige Reihe dem Ansaugraum zugewandt, während die abströmseitige Reihe vom Ansaugraum abgewandt ist. Dementsprechend beziehen sich die Adjektive "anströmseitig" und "abströmseitig" auf die Luftströmung, die mit Hilfe des jeweiligen Verdampfers gekühlt werden soll und die hierzu den jeweiligen Verdampfer durchströmt. Dabei werden die beiden Reihen aus Verdampfungsrohren vom Luftstrom nacheinander durchströmt.

Besonders vorteilhaft ist nun eine Weiterbildung, bei der die abströmseitige Reihe an den Einlassanschluss angeschlossen ist, während die anströmseitige Reihe an den Auslassanschluss angeschlossen ist. Hierdurch wird für den jeweiligen Verdampfer eine Anordnung in dem zu kühlenden Luftstrom nach dem Gegenstromprinzip realisiert, was bei dieser Anwendung eine besonders hohe Effizienz für die Wärmeübertragung realisiert. Da sich die Verdampfungsrohre außerdem quer zum Luftstrom erstrecken, ergibt sich für den jeweiligen Verdampfer eine Kreuzgegenstromanordnung.

Bei einer anderen vorteilhaften Weiterbildung können die anströmseitige Reihe und die abströmseitige Reihe in der X-Achse jeweils in wenigstens zwei Gruppen unterteilt sein, die jeweils mehrere in der X-Achse nebeneinander angeordnete Verdampfungsrohre aufweisen. Denkbar ist beispielsweise, in der jeweiligen Reihe zwei, drei oder vier oder mehr derartige Gruppen auszubilden. Die einzelnen Gruppen sind innerhalb des jeweiligen Verdampfers mit Hilfe von im Verteiler- und Sammlerkasten und im Umlenkkasten ausgebildeten Kammern miteinander verschaltet, und zwar derart, dass das Kältemittel im Betrieb der Verdampfereinheit zunächst innerhalb der abströmseitigen Reihe von der an den Einlassanschluss angeschlossenen ersten Gruppe der abströmseitigen Reihe bis zur letzten Gruppe der abströmseitigen Reihe strömt und dann innerhalb der anströmseitigen Reihe von der ersten Gruppe der anströmseitigen Reihe bis zu der an den Auslassanschluss angeschlossenen letzten Gruppe der anströmseitigen Reihe strömt. Durch die Unterteilung der beiden Reihen in jeweils mehrere Gruppen ergibt sich ein signifikant verlängerter Strömungsweg für das Kältemittel innerhalb der beiden Reihen, wodurch sich die Verweildauer des Kältemittels innerhalb des Verdampfers entsprechend verlängert. Dementsprechend verlängert sich auch die Zeit, in der das Kältemittel innerhalb des Verdampfers Wärme von dem zu kühlenden Luftstrom aufnehmen kann. Auch diese Maßnahme führt zu einer erhöhten Effizienz des Verdampfers.

Gemäß einer nicht erfindungsgemäßen Ausführungsform sind die beiden Verdampfer um eine Hochachse der Verdampfereinheit zueinander gewendet angeordnet, so dass sich die Einlassanschlüsse und die Auslassanschlüsse der beiden Verdampfer bezüglich der Hochachse der Verdampfereinheit am gleiche Ende der Verdampfer und bezüglich einer Längsachse der Verdampfereinheit an verschiedenen Enden der Verdampfer befinden. Mit anderen Worten, die Anschlüsse für Einlass und Auslass des Kältemittels liegen bei beiden Verdampfern entweder jeweils oben oder jeweils unten. Hierdurch vereinfacht sich eine Leitungsführung zum Einbinden der Verdampfer in einen Kältekreis. Üblicherweise erfolgt die Einbindung eines derartigen Verdampfers in den Kältekreis über ein Expansionsventil.

Bei einer nicht erfindungsgemäßen Weiterbildung können die beiden Verdampfer um die Hochachse der Verdampfereinheit um etwa 180°C zueinander verdreht angeordnet sein. Mit anderen Worten, die beiden Verdampfer sind um die Hochachse um 180° ± 20°, vorzugsweise um 180° ± 10° und insbesondere um 180° zueinander verdreht angeordnet, jeweils im Rahmen der Herstellungstoleranzen.

Bei einer anderen nicht erfindungsgemäßen Weiterbildung können die beiden Verdampfer mit ihrer Z-Achse jeweils gegenüber der Hochachse geneigt angeordnet sein. Dies entspricht einer Verdrehung des jeweiligen Verdampfers um dessen X-Achse. Beispielsweise beträgt ein derartiger Neigungswinkel maximal 45°. Hierdurch lässt sich die in der Hochachse erforderliche Bauhöhe der Verdampfereinheit reduzieren. Ebenso ist denkbar, die Verdampfer mit ihrer Z-Achse parallel zur Hochachse auszurichten.

Erfindungsgemäß sind die beiden Verdampfer und eine Längsachse der Verdampfereinheit zueinander gewendet angeordnet, derart, dass sich die Einlassanschlüsse und die Auslassanschlüsse der beiden Verdampfer bezüglich einer Hochachse der Verdampfereinheit an verschiedenen Enden der Verdampfer und bezüglich der Längsachse der Verdampfereinheit am gleichen Ende der Verdampfer befinden. Auch diese Maßnahme führt zu einer vereinfachten Leitungsführung zum Einbinden der Verdampfer in den Kältekreis. Da sich die Anschlüsse für Einlass und Auslass der beiden Verdampfer auf derselben Seite der Verdampfereinheit befinden, lassen sich insbesondere besonders kurze Leitungen für die druckseitige Einbindung der Verdampfer in den Kältekreis realisieren, was die damit verbundenen Kosten reduziert.

Bei einer vorteilhaften Weiterbildung können die Verdampfer um die Längsachse um etwa 180° zueinander verdreht angeordnet sein. Mit anderen Worten, die Verdampfer sind um die Längsachse um 180° ± 20°, vorzugsweise um 180° ± 10° und insbesondere um 180° zueinander verdreht angeordnet, jeweils im Rahmen der üblichen Herstellungstoleranzen.

Bei einer anderen vorteilhaften Weiterbildung können die Verdampfer mit ihrer Z-Achse jeweils etwa parallel zur Hochachse ausgerichtet angeordnet sein. Hierdurch ergibt sich eine besonders effiziente Durchströmung der Verdampfer.

Bei einer anderen vorteilhaften Ausführungsform können die Verdampfer mit ihrer X-Achse jeweils geneigt zur Längsachse angeordnet sein. Beispielsweise beträgt ein Winkel zwischen der X-Achse des jeweiligen Verdampfers und der Längsachse der Verdampfereinheit maximal 30°. Durch diese Maßnahme kann die Abmessung der Verdampfereinheit in ihrer Längsachse reduziert werden.

Eine andere Ausführungsform schlägt vor, für beide Verdampfer ein gemeinsames Expansionsventil vorzusehen, dessen verdampferseitiger Flüssiganschluss über Einlassleitungen mit den Einlassanschlüssen der beiden Verdampfer verbunden ist und dessen verdampferseitiger Gasanschluss über Auslassleitungen mit den Auslassanschlüssen der beiden Verdampfer verbunden ist. Durch die Verwendung eines gemeinsamen Expansionsventils ist eine vereinfachte Leitungsführung für die Einbindung der beiden Verdampfer in den Kältekreis möglich. Bei einem gemeinsamen Expansionsventil lässt sich insbesondere auch eine räumliche Anordnung des Expansionsventils innerhalb der Verdampfereinheit weitgehend unabhängig von der räumlichen Anordnung der Verdampfer realisieren.

Bevorzugt ist jedoch eine alternative Ausführungsform, bei der jeder Verdampfer ein separates Expansionsventil aufweist, dessen verdampferseitiger Flüssiganschluss über eine Einlassleitung mit dem Einlassanschluss des jeweiligen Verdampfers verbunden ist und dessen verdampferseitiger Gasanschluss über eine Auslassleitung mit dem Auslassanschluss des jeweiligen Verdampfers verbunden ist. Die Verwendung derartiger separater Expansionsventile für jeden Verdampfer ermöglicht es, die erforderlichen Verbindungsleitungen, welche die verdampferseitigen Anschlüsse des Expansionsventils mit den Anschlüssen des Verdampfers verbinden, möglichst kurz zu gestalten. Dies ist von Vorteil, da der Kältekreis unter Druck steht, so dass diese Verbindungsleitungen entsprechend druckstabil ausgestaltet werden müssen.

Vorteilhaft kann vorgesehen sein, dass das jeweilige Expansionsventil bezüglich der Z-Achse des jeweiligen Verdampfers im Wesentlichen mittig angeordnet ist. Hierdurch ergibt sich eine gewisse Symmetrie, welche die Wendbarkeit der Verdampfer um die Längsachse vereinfacht. Außerdem ergebn sich verkürzte Leitungen.

Optional kann vorgesehen sein, dass das jeweilige Expansionsventil in der Querachse über den zugehörigen Verdampfer ausschließlich an der dem Ansaugraum zugewandten Anströmseite vorsteht. Auch diese Maßnahme führt zu verkürzten Leitungslängen.

Außerdem kann optional vorgesehen sein, dass sich am jeweiligen Verdampfer die Einlassleitung und die Auslassleitung gegenüber der Z-Achse des jeweiligen Verdampfers geneigt erstrecken. Insbesondere kann vorgesehen sein, dass die Einlassleitung und die Auslassleitung gegenüber der Z-Achse des jeweiligen Verdampfers so geneigt sind, dass das zugehörige Expansionsventil am jeweiligen Verdampfer in Richtung zur Anströmseite des jeweiligen Verdampfers versetzt angeordnet ist. Auch hier werden kurze Leitungslängen unterstützt.

Optional kann vorgesehen sein, dass das jeweilige Expansionsventil mit seiner Längsachse im Wesentlichen parallel zur Querrichtung ausgerichtet ist. Auch dies vereinfacht die Wendbarkeit des Verdampfers um die Längsachse.

Die Formulierungen "im Wesentlichen mittig" oder "im Wesentlichen parallel" sollen gegenüber den Formulierungen "mittig" bzw. "parallel" Abweichungen umfassen, die im Rahmen der Herstellung bei üblichen Herstellungstoleranzen auftreten. Insbesondere sollen dadurch Abweichungen von ± 10% und vorzugsweise von ± 5% eingeschlossen sein.

Bei einer vorteilhaften Weiterbildung kann das jeweilige Expansionsventil einen Steuerkopf aufweisen, der bezüglich einer Längsrichtung des Expansionsventils stirnseitig an einem Ventilgehäuse des Expansionsventils angeordnet ist. Der Flüssiganschluss und der Gasanschluss sind dabei in besagter Längsrichtung des Expansionsventils nebeneinander am Ventilgehäuse angeordnet. Ferner ist das Expansionsventil mit seiner Längsrichtung um maximal 90° gegenüber der Hochachse der Verdampfereinheit geneigt angeordnet.

Für eine Ausführungsform, bei der separate Expansionsventile vorgesehen sind und bei der die Verdampfer um die Hochachse der Verdampfereinheit zueinander gewendet sind, wird ein Neigungswinkel zwischen 0° und 90°, vorzugsweise zwischen 15° und 75°, insbesondere zwischen 30° und 60°, zwischen der Längsrichtung des Expansionsventils und der Hochachse der Verdampfereinheit bevorzugt. Für eine Ausführungsform, bei der separate Expansionsventile für die beiden Verdampfer vorgesehen sind und bei der die beiden Verdampfer um die Längsachse der Verdampfereinheit zueinander gewendet sind, wird ein Neigungswinkel zwischen der Längsrichtung des jeweiligen Expansionsgehäuses und der Hochachse Verdampfereinheit von 90° bevorzugt, wobei dieser Winkel im Rahmen der Herstellungstoleranzen zu verstehen ist. Hierdurch bleibt beim Verdrehen der Verdampfer um die Längsachse der Verdampfereinheit um 180° die im Wesentlichen horizontale Ausrichtung des Expansionsventils erhalten.

Bei einer anderen vorteilhaften Weiterbildung können die Einlassleitung und die Auslassleitung aus Metall bestehen, so dass sie das Expansionsventil relativ zum Verdampfer positionieren. Hierdurch bildet der jeweilige Verdampfer gemeinsam mit dem zugehörigen, separaten Expansionsventil eine Baugruppe, die sich einfach vormontieren lässt. Gleichzeitig wird erreicht, dass bei spiegelbildlicher Anordnung der Verdampfer nicht nur baugleiche Verdampfer, sondern auch baugleiche Baugruppen verwendet werden können, was die Serienproduktion der Verdampfereinheit bzw. der damit ausgestatteten Aufdachklimaanlage begünstigt.

Die Verdampfereinheit kann weitere Komponenten aufweisen, wie zum Beispiel ein Verdampfergebläse und/oder ein Luftfilter. Zweckmäßig sind je Verdampfer jeweils ein Verdampfergebläse und jeweils ein Luftfilter vorgesehen.

Die X-Achse, die Y-Achse und die Z-Achse des jeweiligen Verdampfers spannen ein kartesisches Koordinatensystem auf, bei dem die einzelnen Achsen senkrecht zueinander verlaufen. Die Längsachse, die Querachse und die Hochachse der Verdampfereinheit spannen ein kartesisches Koordinatensystem auf, in dem die einzelnen Achsen senkrecht zueinander verlaufen. In einem Sonderfall können die Koordinatensysteme der Verdampfer zueinander parallel ausgerichtet sein. In einem weiteren Sonderfall können die Koordinatensysteme der Verdampfer parallel zum Koordinatensystem der Verdampfereinheit ausgerichtet sein. Im montierten Zustand der Aufdachklimaanlage erstreckt sich die Längsachse der Verdampfereinheit bevorzugt parallel zu einer Fahrzeuglängsachse, also horizontal. Die Querachse der Verdampfereinheit erstreckt sich dann parallel zu einer Fahrzeugquerachse, also auch horizontal. Die Hochachse der Verdampfereinheit erstreckt sich dann parallel zu einer Fahrzeughochachse, also vertikal.

Eine erfindungsgemäße Aufdachklimaanlage, die für eine Verwendung auf einem Dach eines Straßenfahrzeugs vorgesehen ist, umfasst zumindest eine Verdampfereinheit der vorstehend beschriebenen Art. Des Weiteren ist ein Kältekreis vorgesehen, in den die beiden Verdampfer der Verdampfereinheit eingebunden sind. Zweckmäßig können die beiden Verdampfer über diesen Kältekreis mit wenigstens einem Kondensator gekoppelt sein. Optional kann die Aufdachklimaanlage außerdem zumindest eine Kondensatoreinheit aufweisen, die besagten Kondensator umfasst, der demensprechend ebenfalls in den Kältekreis eingebunden ist. Eine solche Kondensatoreinheit kann weitere Komponenten aufweisen. Beispielsweise kann ein Kondensatorgebläse vorgesehen sein. Ebenso kann eine Lüfterzarge vorgesehen sein, die einen Strömungspfad vom Kondensator zum Kondensatorgebläse definiert. Die Aufdachklimaanlage kann außerdem mit einem Kompressor ausgestattet sein, der z.B. in der Verdampfereinheit oder in der Kondensatoreinheit untergebracht sein kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondem auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte Frontansicht eines Fahrzeugs mit einer Aufdachklimaanlage,
- Fig. 2: eine auseinandergezogene, isometrische Ansicht der Aufdachklimaanlage,
- Fig. 3: eine isometrische Ansicht eines Verdampfers einer Verdampfereinheit der Aufdachklimaanlage,
- Fig. 4: eine Draufsicht auf die Verdampfereinheit bei einer nicht erfindungsgemäßen ersten Ausführungsform,
- Fig. 5: eine vereinfachte Draufsicht wie in Fig. 4, jedoch bei einer Variante der Verdampfereinheit,
- Fig. 6: eine vereinfachte Seitenansicht der Verdampfereinheit aus Fig. 4,
- Fig. 7: eine Draufsicht auf die Verdampfereinheit bei einer erfindungsgemäßen zweiten Ausführungsform,
- Fig. 8: eine vereinfachte Draufsicht auf eine Variante der Verdampfereinheit aus Fig. 7,
- Fig. 9: eine vereinfachte Seitenansicht der Verdampfereinheit aus Fig. 7.

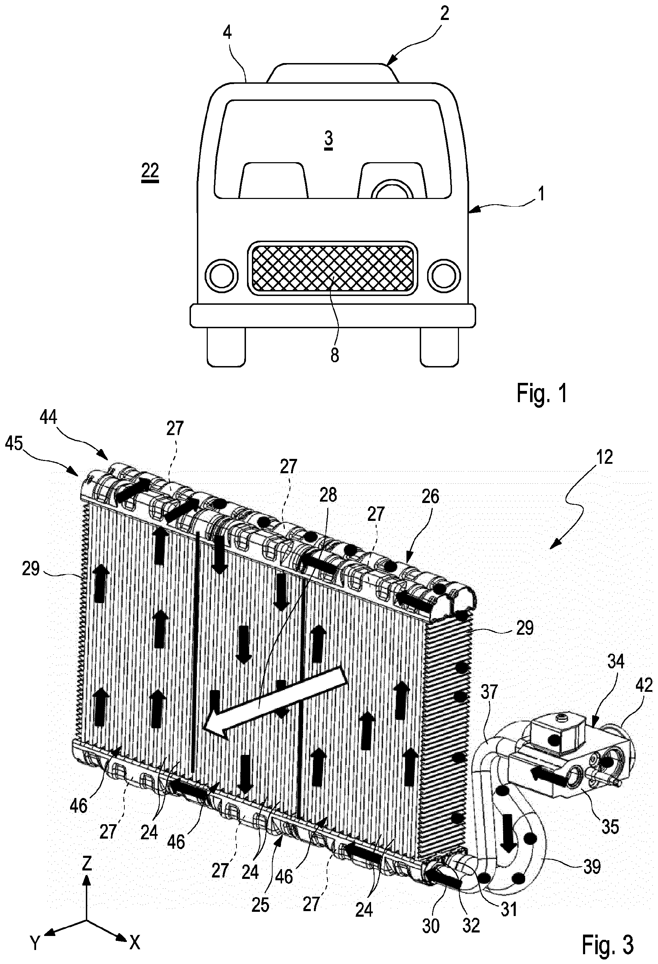

Entsprechend Fig. 1 kann ein Straßenfahrzeug 1, bei dem es sich im gezeigten Beispiel um einen Omnibus handelt, mit einer Aufdachklimaanlage 2 ausgestattet sein, mit deren Hilfe ein Fahrgastraum 3 gekühlt werden soll. Die Aufdachklimaanlage 2 ist hierzu auf einem Dach 4 des Fahrzeugs 1 montiert.

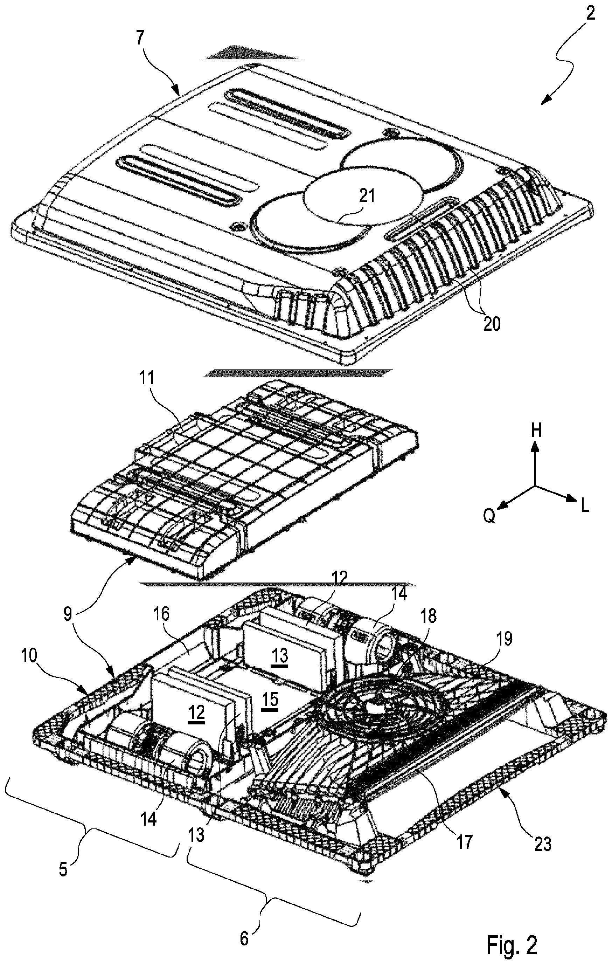

Gemäß Fig. 2 umfasst eine derartige Aufdachklimaanlage 2 eine Verdampfereinheit 5 sowie eine Kondensatoreinheit 6, die über wenigstens einen, hier nicht gezeigten Kältekreis miteinander gekoppelt sind. Ferner ist eine Haube 7 vorgesehen, die im montierten Zustand am Fahrzeugdach 4 die Verdampfereinheit 5 und die Kondensatoreinheit 6 gemeinsam abdeckt. Grundsätzlich ist jedoch auch eine Ausführungsform für eine derartige Aufdachklimaanlage 2 denkbar, die ohne eine eigene Kondensatoreinheit 6 auskommt. In diesem Fall deckt die Haube 7 dann nur die Verdampfereinheit 5 ab. In einem derartigen Fall ist die Verdampfereinheit 5 über besagten Kältekreis mit einem anderen Kondensator gekoppelt, der beispielsweise in einem in Fig. 1 angedeuteten Geräteraum 8 oder Motorraum 8 des Fahrzeugs 1 angeordnet sein kann.

Die Verdampfereinheit 5 umfasst ein Gehäuse 9, das im gezeigten Beispiel ein Gehäuseunterteil 10 und ein Gehäuseoberteil 11 aufweist. Im Gehäuse 9 sind zwei Verdampfer 12 angeordnet, die in den genannten Kältekreis eingebunden sind. Jedem Verdampfer 12 ist ein Luftfilter 13 zugeordnet sowie jeweils ein Verdampfergebläse 14. Im Gehäuse 9 befindet sich außerdem ein Ansaugraum 15, in den Luft durch eine im Gehäuseunterteil 10 ausgebildete Einlassöffnung 16 aus dem Fahrzeuginnenraum 3 eintreten kann. Die Verdampfergebläse 14 saugen diese Luft aus dem Ansaugraum 15 durch die Luftfilter 13 und durch die Verdampfer 12 an und fördern die Luft durch hier nicht gezeigte, ebenfalls im Gehäuseunterteil 10 vorgesehene Auslassöffnungen zurück in den Fahrzeuginnenraum 3. Der jeweilige Verdampfer 12 besitzt somit eine dem Ansaugraum 15 zugewandte Anströmseite 47 für Luft sowie eine vom Ansaugraum 15 abgewandte Abströmseite 48 für Luft.

Die Kondensatoreinheit 6 umfasst einen Kondensator 17 sowie ein Kondensatorgebläse 18 und eine Lüfterzarge 19. Die Lüfterzarge 19 definiert einen Strömungskanal zwischen den Kondensator 17 und dem Kondensatorgebläse 18. Ferner sind im Beispiel sowohl der Kondensator 17 als auch das Kondensatorgebläse 18 an dieser Lüfterzarge 19 befestigt. Die Haube 7 weist einen Lufteinlass 20 auf, der zur Einlassseite des Kondensators 17 führt, sowie einen Luftauslass 21, der an der Austrittsseite des Kondensatorgebläses 18 angeordnet ist. Die Haube 7 kann außerdem eine hier nicht erkennbare Frischlufteinlassöffnung aufweisen, die ebenfalls zum Ansaugraum 15 führt, um dem zu kühlenden Luftstrom außerdem Frischluft aus einer Umgebung 22 des Fahrzeugs 1 zumischen zu können. Alternativ kann eine solche haubenseitige Frischlufteinlassöffnung durch einen Spalt gebildet sein, der bei montierter Aufdachklimaanlage 2 zwischen dem Rand der Haube 7 und dem Fahrzeugdach 4 ausgebildet ist.

Der Luftauslass 21 ist hier als im Wesentlichen kreisförmige Öffnung ausgestaltet. Anstelle eines einzigen, zentral bzw. mittig angeordneten Luftauslasses 21 können bei einer anderen, leistungsstärkeren Ausführungsform auch zwei Luftauslässe 21 nebeneinander an der Haube 7 angeordnet sein. In den gezeigten Beispielen ist die Haube 7 bereits für zwei solche, nebeneinanderliegende Luftauslässe 21 vorbereitet. Die entsprechenden Umlaufkonturen überschneiden sich mit dem realisierten mittigen Luftauslass 21. Für die leistungsstärkere Ausführungsform werden dann zur Realisierung der beiden nebeneinander liegenden Luftauslässe 21 diese beiden Umlaufkonturen anstelle des mittigen Luftauslasses 21 freigeschnitten oder freigestanzt. Es ist klar, dass bei dieser leistungsstärkeren Ausführungsform dann demensprechend auch zwei Kondensatorgebläse 18 an der entsprechend angepassten Lüfterzarge 19 vorgesehen sind.

Die Aufdachklimaanlage 2 weist hier außerdem einen Rahmen 23 auf, mit dessen Hilfe das Gehäuse 9 am Fahrzeugdach 4 befestigt werden kann und an dem im Beispiel außerdem die Lüfterzarge 19 angeordnet ist. Ferner kann die Haube 7 an diesem Rahmen 23 befestigt werden.

Gemäß Figur 3 weist der jeweilige Verdampfer 12 mehrere parallel zueinander und parallel zu einer Z-Achse Z des Verdampfers 12 verlaufende Verdampfungsrohre 24 auf, in denen im Betrieb des Verdampfers 12 die Verdampfung des Kältemittels stattfindet. Der Verdampfer 12 weist außerdem einen Verteiler- und Sammlerkasten 25, der sich parallel zu einer X-Achse X des Verdampfers 12 erstreckt, sowie einen Umlenkkasten 26 auf, der sich ebenfalls parallel zur X-Achse X erstreckt. Die Verdampfungsrohre 24 erstrecken sich vom Verteiler- und Sammlerkasten 25 zum Umlenkkasten 26 und verbinden hier nicht erkennbare, im Inneren des Verteiler- und Sammlerkastens 25 sowie im Inneren des Umlenckastens 26 ausgebildete Kammern 27 fluidisch miteinander. Der Verdampfer 12 ist von dem zu kühlenden Luftstrom 28 in einer Y-Achse Y des Verdampfers 12 durchströmbar, wobei der Luftstrom 28 bezüglich der Z-Achse Z zwischen dem Verteiler- und Sammlerkasten 25 und dem Umlenkkasten 26 hindurchströmt und bezüglich der X-Achse X zwischen den einzelnen Verdampfungsrohren 24 hindurchströmt und dabei die Verdampfungsrohre 24 umströmt. In der X-Achse X können zwischen benachbarten Verdampfungsrohren 24 Lamellen 29 und dergleichen angeordnet sein, um die Wärmeübertragung zwischen dem Luftstrom 28 und den Verdampfungsrohren 24 und somit die Wärmeaufnahme in das darin geführte Kältemittel zu verbessern.

Der Verteiler- und Sammlerkasten 25 weist einen Einlassanschluss 30 für flüssiges Kältemittel, das in Fig. 3 durch Pfeile angedeutet ist, sowie einen Auslassanschluss 31 für gasförmiges Kältemittel auf, das in Fig. 3 durch Punkte angedeutet ist. Einlassanschluss 30 und Auslassanschluss 31 sind dabei an derselben Stirnseite 32 des Verteiler- und Sammlerkastens 25 angeordnet. Außerdem sind Einlassanschluss 30 und Auslassanschluss 31 an dieser Stirnseite 32 in der Y-Achse Y nebeneinander angeordnet. Gemäß den Fig. 2 und 4 bis 9 sind die beiden Verdampfer 12 beiderseits des Ansaugraums 15 der Verdampfereinheit 5 angeordnet, und zwar so, dass sie sich in einer Querachse Q der Verdampfereinheit 5 gegenüberliegen. Ferner sind die beiden Verdampfer 12 baugleich ausgestaltet. Sie sind also identisch und ohne Weiteres gegeneinander austauschbar.

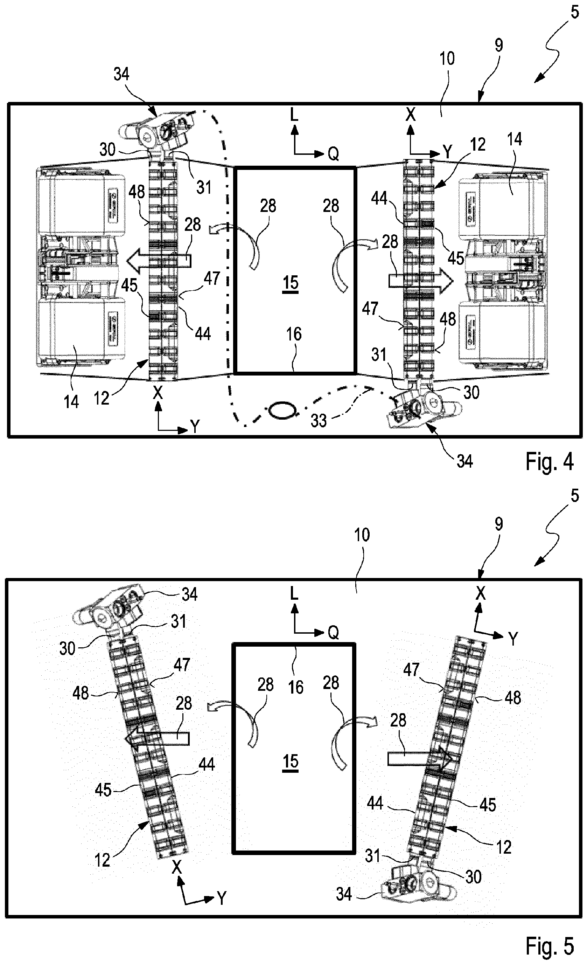

Bei der in den Fig. 4 bis 6 gezeigten ersten Ausführungsform sind die beiden Verdampfer 12 in der Verdampfereinheit 5 um eine Hochachse H, die in den Figuren 4 und 5 senkrecht auf der Zeichnungsebene steht, zueinander gewendet angeordnet. die gewendete Anordnung wird in den gezeigten Beispielen dadurch erzielt, dass die beiden Verdampfer 12 um besagte Hochachse H um etwa 180° zueinander verdreht angeordnet sind. Mit anderen Worten, der eine Verdampfer 12 kann durch die Drehung um die Hochachse H in den anderen Verdampfer 12 überführt werden. Erkennbar ist dies daran, dass sich die Einlassanschlüsse 30 und die Auslassanschlüsse 31 der beiden Verdampfer 12 bezüglich der Hochachse H am gleichen Ende der Verdampfer 12 befinden und bezüglich einer Längsachse L der Verdampfereinheit 5 an verschiedenen Enden der Verdampfer 12 befinden. Die Einlassanschlüsse 30 und die Auslassanschlüsse 31 befinden sich gemäß den Fig. 4 und 5 somit entweder jeweils an dem in den Fig. 4 und 5 dem Betrachter zugewandten oberen Ende der Verdampfer 12 oder jeweils an dem in den Fig. 4 und 5 vom Betrachter abgewandten unteren Ende des jeweiligen Verdampfers 12. Erkennbar befinden sich besagte Anschlüsse 30, 31 bei den beiden Verdampfern 12 bezüglich der Längsachse L an entgegengesetzten Seiten der Verdampfereinheit 5 bzw. an entgegengesetzten Enden der Verdampfer 12. Bei der in Fig. 4 gezeigten Ausführungsform sind die Verdampfer 12 innerhalb der Verdampferanordnung 5 so angeordnet, dass sich die X-Achsen X parallel zur Längsachse L und die Z-Achsen Z parallel zur Hochachse H erstrecken. Ferner erstrecken sich die Y-Achsen Y parallel zu einer Querrichtung Q der Verdampfereinheit 5. Zweckmäßig stehen die Achsen X, Y, Z des jeweiligen Verdampfers 12 senkrecht aufeinander. Ebenso stehen die Achsen L, Q und H der Verdampfereinheit 5 zweckmäßig senkrecht aufeinander.

Bei der in Fig. 5 gezeigten Ausführungsform erstrecken sich die Z-Achsen Z der Verdampfer 12 parallel zur Hochachse H der Verdampfereinheit 5, sind jedoch um die Z-Achse Z bezüglich der Verdampfereinheit 5 verdreht. Dementsprechend liegt ein hier nicht näher bezeichneter Neigungswinkel zwischen den X-Achsen X und der Längsachse L vor. Ebenso liegt derselbe Neigungswinkel zwischen den Y-Achsen Y und der Querachse Q vor.

In Fig. 4 ist außerdem eine Kopplung 33 der beiden Verdampfer 12 angedeutet, die mit Hilfe der Einbindung der beiden Verdampfer 12 in den nicht gezeigten Kältekreis der Aufdachklimaanlage 2 erreicht wird.

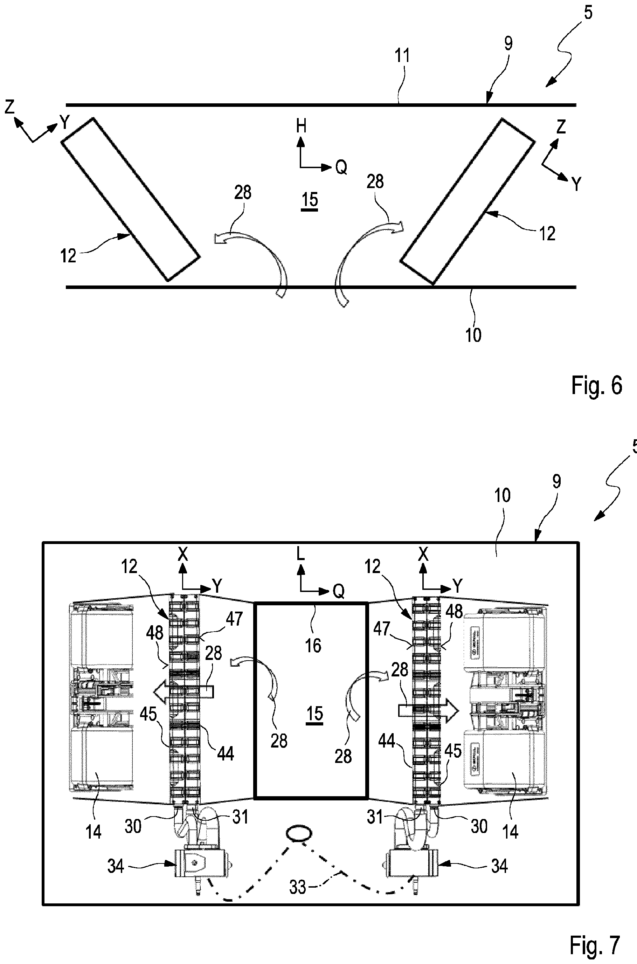

Bei der in Fig. 6 gezeigten Ausführungsform ist zwischen den Z-Achsen Z der beiden Verdampfer 12 außerdem ein Neigungswinkel gegenüber der Hochachse H wiedergegeben, wodurch sich die Bauhöhe der Verdampfereinheit 5 in der Hochachse H reduzieren lässt. Hierzu sind die Verdampfer 12 jeweils um ihre X-Achse X gekippt, die in Fig. 6 senkrecht auf der Zeichnungsebene steht.

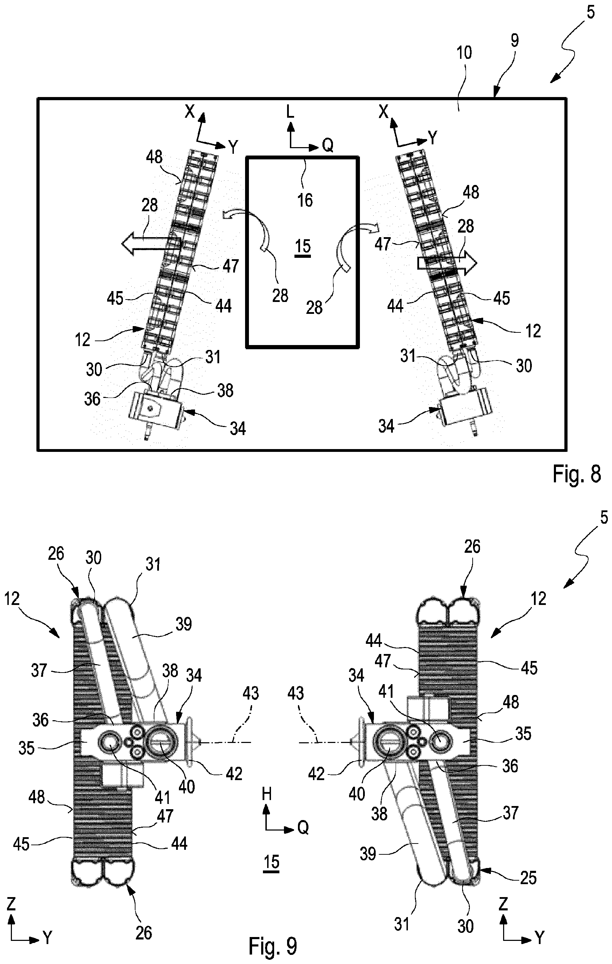

Die Fig. 7 bis 9 zeigen eine zweite Ausführungsform, bei der die beiden Verdampfer 12 um die Längsachse L der Verdampfereinheit 5 zueinander gewendet angeordnet sind. Die Wendung wird in den gezeigten Beispielen ebenfalls dadurch erreicht, dass die beiden Verdampfer 12 um besagte Längsachse L um etwa 180° zueinander verdreht angeordnet sind. In der Folge sind die Einlassanschlüsse 30 und die Auslassanschlüsse 31 der beiden Verdampfer 12 bezüglich der Hochachse H, die in den Figuren 7 und 8 wieder senkrecht auf der Zeichnungsebene steht, an verschiedenen Enden der Verdampfer 12 angeordnet, während sie bezüglich der Längsachse L jeweils am gleichen Ende der Verdampfer 12 angeordnet sind. Beispielsweise befinden sich in den Figuren 7 und 8 die Anschlüsse 30, 31 beim links gezeigten Verdampfer 12 jeweils an dem vom Betrachter abgewandten unteren Ende des Verdampfers 12, während sie sich beim rechts gezeigten Verdampfer 12 an dem dem Betrachter zugewandten oberen Ende des Verdampfers 12 befinden. Besser erkennbar ist dies in Fig. 9. Ferner befinden sich diese Anschlüsse 31, 31 für Einlass und Auslass des Kältemittels jeweils auf der gleichen Seite der beiden Verdampfer 12 bzw. auf derselben Seite der Verdampfereinheit 5. Hierdurch vereinfacht sich die zuvor genannte Kopplung 33 zur Einbindung der beiden Verdampfer 12 in den Kältekreis.

Bei der in Fig. 7 gezeigten Ausführungsform sind die Achsen X, Y; Z der Verdampfer 12 wieder parallel zu den Achsen L, Q und H der Verdampfereinheit 5 ausgerichtet.

Bei der in Fig. 8 gezeigten Ausführungsform sind die beiden Verdampfer 12 wieder um ihre Z-Achse Z gegenüber der Verdampfereinheit 5 verdreht, so dass sich ein Neigungswinkel zwischen den X-Achsen X und der Längsachse L einerseits und zwischen den Y-Achsen Y und der Querachse Q andererseits einstellt. Die Z-Achsen Z sind dagegen wieder parallel zur Hochachse H.

Bei den hier gezeigten Beispielen weist jeder Verdampfer 12 ein eigenes bzw. separates Expansionsventil 34 auf, das mit Bezug auf Fig. 9 näher beschrieben wird. Grundsätzlich kann das Expansionsventil 34 jedoch bei allen hier gezeigten Ausführungsformen denselben Aufbau aufweisen. Das Expansionsventil 34 besitzt ein Gehäuse 35 und weist einen Flüssiganschluss 36 auf, der über eine Einlassleitung 37 fluidisch mit dem Einlassanschluss 30 des jeweiligen Verdampfers 12 verbunden ist. Ferner weist das Expansionsventil 34 einen Gasanschluss 38 auf, der über eine Auslassleitung 39 fluidisch an den Auslassanschluss 31 des jeweiligen Verdampfers 12 angeschlossen ist. Des Weiteren besitzt das Expansionsventil einen Kondensatoranschluss 40, der über eine entsprechende, hier nicht gezeigte Leitung letztlich an den Kondensator 17 angeschlossen ist. Außerdem besitzt das Expansionsventil 34 einen Kompressoranschluss 41, der über eine hier nicht gezeigte Druckleitung an eine Druckseite eines ebenfalls nicht gezeigten Kompressors der Aufdachklimaanlage 2 angeschlossen ist. Die Saugseite des Kompressors ist an den Kondensator 17 angeschlossen. Besagter Kompressor kann beispielsweise in der Kondensatoreinheit 6 oder ebenfalls in der Verdampfereinheit 5 untergebracht sein.

Das Expansionsventil 34 weist außerdem einen Steuerkopf 42 auf, der den Zustrom an flüssigem Kältemittel zum Verdampfer 12 steuert. Der Steuerkopf 42 ist bezüglich einer Längsrichtung 43 des Expansionsventils 34 stirnseitig am Ventilgehäuse 35 angeordnet. Der Flüssiganschluss 36 und der Gasanschluss 38 sind in dieser Längsrichtung 43 nebeneinander am Ventilgehäuse 35 angeordnet. Dementsprechend sind auch der Kondensatoranschluss 40 und der Kompressoranschluss 41 in der Längsrichtung 43 des Ventilgehäuses 35 nebeneinander angeordnet. Bei der in den Fig. 7 bis 9 gezeigten zweiten Ausführungsform ist das Expansionsventil 34 räumlich so angeordnet, das seine Längsrichtung 43 gegenüber der Hochachse H einen Winkel von 90° einschließt. Bei den Ausführungsformen der Fig. 4 bis 6 ist dagegen eine Neigung der Längsrichtung 43 gegenüber der Hochachse H vorgesehen, die in einem Bereich von 0° bis 90° liegen kann. Wichtig ist dabei, dass der Steuerkopf 42 im eingebauten Zustand oben angeordnet ist, wenn das Expansionsventil 34 hinsichtlich seiner Längsrichtung 43 gegenüber der Hochachse H geneigt ist. Vorzugsweise bilden die Verdampfer 12 gemeinsam mit dem zugehörigen Expansionsventil 34 eine vormontierbare Baugruppe. Hierbei kann über Einlassleitungen 37 und Auslassleitungen 39 aus Metall außerdem eine gewünschte Positionierung des Expansionsventils 34 relativ zum Verdampfer 12 gewährleistet werden.

Grundsätzlich kann gemäß Fig. 9 das jeweilige Expansionsventil 34 bezüglich der Z-Achse Z des jeweiligen Verdampfers 12 etwa mittig angeordnet sein, was die Wendbarkeit um die Längsachse L verbessert. Ferner ist hier vorgesehen, dass das jeweilige Expansionsventil 34 in der Querachse Q über den zugehörigen Verdampfer 12 ausschließlich an der dem Ansaugraum 15 zugewandten Anströmseite 47 vorsteht. Außerdem ist hier vorgesehen, dass sich am jeweiligen Verdampfer 12 die Einlassleitung 37 und die Auslassleitung 39 gegenüber der Z-Achse Z des jeweiligen Verdampfers 12 geneigt erstrecken. Speziell ist vorgesehen, dass die Einlassleitung 37 und die Auslassleitung 39 gegenüber der Z-Achse Z des jeweiligen Verdampfers 12 so geneigt sind, dass das zugehörige Expansionsventil 34 am jeweiligen Verdampfer 12 in Richtung zur Anströmseite des jeweiligen Verdampfers 12 versetzt angeordnet ist. Darüber hinaus ist hier vorgesehen, dass das jeweilige Expansionsventil 34 mit seiner Längsachse 43 etwa parallel zur Querrichtung Q ausgerichtet ist.

Mit Bezug auf Fig. 3 wird im Folgenden eine besonders vorteilhafte Ausgestaltung des jeweiligen Verdampfers 12 näher erläutert. Dementsprechend besitzt der jeweilige Verdampfer 12 eine anströmseitige Reihe 44 von Verdampfungsrohren 24, die in der X-Achse X nebeneinander angeordnet sind, sowie eine abströmseitige Reihe 45 an Verdampfungsrohren 24, die ebenfalls in der X-Achse X nebeneinander angeordnet sind. Die Verdampfungsrohre 24 der anströmseitigen Reihe 44 und die Verdampfungsrohre 44 der abströmseitigen Reihe 45 sind in der Y-Achse Y nebeneinander angeordnet. Dementsprechend befindet sich die anströmseitige Reihe 44 in Fig. 3 auf der vom Betrachter abgewandten Seite des Verdampfers 12, während sich die abströmseitige Reihe 45 auf der dem Betrachter zugewandten Seite befindet. Dementsprechend wird die anströmseitige Reihe 44 von dem Luftstrom 28 zuerst angeströmt und durchströmt, während die abströmseitige Reihe 45 erst danach vom Luftstrom 28 durchströmt wird. Im Einbauzustand ist die anströmseitige Reihe 44 dem Ansaugraum 15 zugewandt, während die abströmseitige Reihe 45 vom Ansaugraum 15 abgewandt ist. Beachtenswert ist ferner, dass die abströmseitige Reihe 45 an den Einlassanschluss 40 angeschlossen ist und dementsprechend mit dem flüssigen, kalten Kältemittel versorgt wird. Im Unterschied dazu ist die anströmseitige Reihe 44 an den Auslassanschluss 31 angeschlossen, so dass das erwärmte, gasförmige Kältemittel aus der anströmseitigen Reihe 44 austritt.

Ferner ist gemäß Fig. 3 vorgesehen, die anströmseitige Reihe 44 und die abströmseitige Reihe 45 in der X-Achse jeweils in drei Gruppen 46 zu unterteilen, wobei in jeder Gruppe 46 mehrere Verdampfungsrohre 24 in der X-Achse X nebeneinander angeordnet sind. Die einzelnen Gruppen 46 der anströmseitigen Reihe 44 und der abströmseitigen Reihe 45 werden mit Hilfe der weiter oben genannten Kammern 27, die in dem Verteiler- und Sammlerkasten 25 sowie im Umlenkkasten 26 ausgebildet sind, miteinander verschaltet, so dass sich folgende Durchströmung des Kondensators 12 ergibt. Durch den Einlassanschluss 30 gelangt das flüssige Kältemittel innerhalb der abströmseitigen Reihe 45 in die an den Einlassanschluss 30 angeschlossene erste Gruppe 46 der abströmseitigen Seite 45. Da in Fig. 3 der Verteiler- und Sammlerkasten 25 unten angeordnet ist, strömt das Kältemittel in dieser ersten Gruppe 46 der abströmseitigen Reihe 45 zunächst nach oben in den Umlenkkasten 26. In einer entsprechenden Kammer 27 erfolgt im Umlenkkasten 26 die Umlenkung auf die zweite oder mittlere Gruppe 46 der abströmseitigen Reihe 45, in der das Kühlmittel dann nach unten strömt. In einer entsprechenden Kammer 27 des Verteiler- und Sammlerkastens 25 wird das Kältemittel dann der dritten und letzten Gruppe 46 der abströmseitigen Reihe 45 zugeführt, in der das Kältemittel dann wieder nach oben zum Umlenkkasten 26 strömt. In einer entsprechenden Kammer 27 wird das Kältemittel im Umlenkkasten 26 dann der ersten Gruppe 46 der anströmseitigen Reihe 44 zugeführt, in der das Kältemittel dann wieder nach unten zum Verteiler- und Sammlerkasten 25 strömt. In einer weiteren Kammer 27 erfolgt dort die Umlenkung in die zweite oder mittlere Gruppe 46 der anströmseitigen Reihe 44, in der das Kältemittel dann wieder nach oben zum Umlenkkasten 26 strömt. In einer weiteren Kammer 27 erfolgt im Umlenkkasten 26 die Umlenkung auf die dritte und letzte Gruppe 46 der anströmseitigen Reihe 44, in der das mittlerweile gasförmige Kältemittel in Richtung Verteiler- und Sammlerkasten 45 strömt. Da die letzte Gruppe 46 der anströmseitigen Reihe an den Auslassanschluss 31 angeschlossen ist, strömt das gasförmige Kältemittel über eine weitere Kammer 27 des Verteiler- und Sammlerkastens 25 dann aus dem Verdampfer 12 aus.

Zusammenfassend werden also die abströmseitige Reihe 45 und die anströmseitige Reihe 44 vom Kältemittel in Reihe, also nacheinander durchströmt. Innerhalb der jeweiligen Reihe 44, 45 werden die Gruppen 46 vom Kältemittel in Reihe, also nacheinander durchströmt. Innerhalb der jeweiligen Gruppe 46 werden die Verdampfungsrohre 24 vom Kältemittel parallel, also gleichzeitig durchströmt. Bevorzugt ist dabei die hier gezeigte Anordnung, bei der die beiden Verdampfer 12 vom Luftstrom 28 und vom Kältemittel jeweils nach dem Kreuzgegenstromprinzip durchströmt werden.

## Patentansprüche

1. Verdampfereinheit für eine Aufdachklimaanlage (2) eines Straßenfahrzeugs (1),
- mit einem Gehäuse (9), in dem zwei Verdampfer (12) angeordnet sind, die jeweils mehrere parallel zueinander und parallel zu einer Z-Achse (Z) des Verdampfers (12) verlaufende Verdampfungsrohre (24), einen parallel zu einer X-Achse (X) des Verdampfers (12) verlaufenden Verteiler- und Sammlerkasten (25) und einen parallel zur X-Achse (X) des Verdampfers (12) verlaufenden Umlenkkasten (26) aufweist,
- wobei sich die Verdampfungsrohre (24) vom Verteiler- und Sammlerkasten (25) zum Umlenkkasten (26) erstrecken,
- wobei der Verteiler- und Sammlerkasten (25) einen Einlassanschluss (30) für flüssiges Kältemittel und einen Auslassanschluss (31) für gasförmiges Kältemittel aufweist, die an derselben Stirnseite (32) des Verteiler- und Sammlerkastens (25) und in einer Y-Achse (Y) des Verdampfers (12) nebeneinander angeordnet sind,
- wobei die beiden Verdampfer (12) beiderseits eines Ansaugraums (15) der Verdampfereinheit (5) und sich in einer Querachse (Q) der Verdampfereinheit (5) gegenüberliegend angeordnet sind,
- wobei die beiden Verdampfer (12) baugleich ausgestaltet sind,
**dadurch gekennzeichnet,**
**dass** die beiden Verdampfer (12) um eine Längsachse (L) der Verdampfereinheit (5) zueinander gewendet angeordnet sind, so dass sich die Einlassanschlüsse (30) und die Auslassanschlüsse (31) der beiden Verdampfer (12) bezüglich einer Hochachse (H) der Verdampfereinheit (5) an verschiedenen Enden der Verdampfer (12) und bezüglich der Längsachse (L) am gleichen Ende der Verdampfer (12) befinden.

2. Verdampfereinheit nach Anspruch 1,
**dadurch gekennzeichnet,**
**dass** jeder Verdampfer (12) ein separates Expansionsventil (34) aufweist, dessen Flüssiganschluss (36) über eine Einlassleitung (37) mit dem Einlassanschluss (30) des jeweiligen Verdampfers (12) verbunden ist und dessen Gasanschluss (38) über eine Auslassleitung (39) mit dem Auslassanschluss (31) des jeweiligen Verdampfers (12) verbunden ist.

3. Verdampfereinheit nach Anspruch 2,
**dadurch gekennzeichnet,**
- **dass** das jeweilige Expansionsventil (34) bezüglich der Z-Achse (Z) des jeweiligen Verdampfers (12) im Wesentlichen mittig angeordnet ist, und/oder
- **dass** das jeweilige Expansionsventil (34) in der Querachse (Q) über den zugehörigen Verdampfer (12) ausschließlich an einer dem Ansaugraum (15) zugewandten Anströmseite vorsteht.

4. Verdampfereinheit nach Anspruch 3,
**dadurch gekennzeichnet,**
**dass** sich am jeweiligen Verdampfer (12) die Einlassleitung (37) und die Auslassleitung (39) gegenüber der Z-Achse (Z) des jeweiligen Verdampfers (12) geneigt erstrecken, wobei die Einlassleitung (37) und die Auslassleitung (39) gegenüber der Z-Achse (Z) des jeweiligen Verdampfers (12) so geneigt sein können, dass das zugehörige Expansionsventil (34) am jeweiligen Verdampfer (12) in Richtung zur Anströmseite des jeweiligen Verdampfers (12) versetzt angeordnet ist.

5. Verdampfereinheit nach einem der Ansprüche 2 bis 4,
**dadurch gekennzeichnet,**
**dass** das jeweilige Expansionsventil (34) mit seiner Längsachse (43) im Wesentlichen parallel zur Querrichtung (Q) ausgerichtet ist.

6. Verdampfereinheit nach Anspruch 1,
**dadurch gekennzeichnet,**
**dass** für beide Verdampfer (12) ein gemeinsames Expansionsventil (34) vorgesehen ist, dessen Flüssiganschluss (36) über Einlassleitungen (37) mit den Einlassanschlüssen (30) der beiden Verdampfer (12) verbunden ist und dessen Gasanschluss (38) über Auslassleitungen (39) mit den Auslassanschlüssen (31) der beiden Verdampfer (12) verbunden ist.

7. Verdampfereinheit nach einem der Ansprüche 2 bis 6,
**dadurch gekennzeichnet,**
- **dass** das jeweilige Expansionsventil (34) einen Steuerkopf (42) aufweist, der bezüglich einer Längsrichtung (43) des Expansionsventils (34) stirnseitig an einem Ventilgehäuse (35) des Expansionsventils (34) angeordnet ist,
- **dass** der Flüssiganschluss (36) und der Gasanschluss (38) in der Längsrichtung (43) des Expansionsventils (34) nebeneinander am Ventilgehäuse (35) angeordnet sind,
- **dass** das jeweilige Expansionsventil (34) mit seiner Längsrichtung (43) um maximal 90° gegenüber der Hochachse (H) der Verdampfereinheit (5) geneigt angeordnet ist.

8. Verdampfereinheit nach einem der Ansprüche 2 bis 7,
**dadurch gekennzeichnet,**
**dass** die Einlassleitung (37) und die Auslassleitung (39) aus Metall bestehen und das Expansionsventil (34) relativ zum jeweiligen Verdampfer (12) positionieren.

9. Verdampfereinheit nach einem der vorhergehenden Ansprüche,
**dadurch gekennzeichnet,**
**dass** die Verdampfer (12) um die Längsachse (L) um etwa 180° zueinander verdreht angeordnet sind.

10. Verdampfereinheit nach einem der vorhergehenden Ansprüche,
**dadurch gekennzeichnet,**
**dass** die Verdampfer (12) mit ihrer Z-Achse (Z) jeweils etwa parallel zur Hochachse (H) ausgerichtet angeordnet sind.

11. Verdampfereinheit nach einem der Ansprüche 1 bis 10,
**dadurch gekennzeichnet,**
**dass** die Verdampfer (12) mit ihrer X-Achse (X) jeweils geneigt zur Längsachse (L) angeordnet sind.

12. Verdampfereinheit nach einem der Ansprüche 1 bis 11,
**dadurch gekennzeichnet,**
- **dass** der jeweilige Verdampfer (12) eine anströmseitige Reihe (44) von in der X-Achse (X) nebeneinander angeordneten Verdampfungsrohren (24) und eine abströmseitige Reihe (45) von in der X-Achse (X) nebeneinander angeordneten Verdampfungsrohren (24) aufweist,
- **dass** die anströmseitige Reihe (44) und die abströmseitige Reihe (45) in der Y-Achse (Y) nebeneinander angeordnet sind,
- **dass** die anströmseitige Reihe (44) dem Ansaugraum (15) zugewandt ist, während die abströmseitige Reihe (45) vom Ansaugraum (15) abgewandt ist.

13. Verdampfereinheit nach Anspruch 12,
**dadurch gekennzeichnet,**
**dass** die abströmseitige Reihe (45) an den Einlassanschluss (30) angeschlossen ist, während die anströmseitige Reihe (44) an den Auslassanschluss (31) angeschlossen ist.

14. Verdampfereinheit nach Anspruch 12 oder 13,
**dadurch gekennzeichnet,**
- **dass** die anströmseitige Reihe (44) und die abströmseitige Reihe (45) in der X-Achse (X) jeweils in wenigstens zwei Gruppen (46) unterteilt sind, die jeweils mehrere in der X-Achse (X) nebeneinander angeordnete Verdampfungsrohre (24) aufweisen,
- **dass** die Gruppen (46) mit Hilfe von im Verteiler- und Sammlerkasten (25) und im Umlenkkasten (26) ausgebildeten Kammern (27) so miteinander verschaltet sind, dass das Kältemittel zunächst innerhalb der abströmseitigen Reihe (45) von der an den Einlassanschluss (30) angeschlossenen ersten Gruppe (46) der abströmseitigen Reihe (45) bis zur letzten Gruppe (46) der abströmseitigen Reihe (45) strömt und dann innerhalb der anströmseitigen Reihe (44) von der ersten Gruppe (46) der anströmseitigen Reihe (44) bis zu der an den Auslassanschluss (31) angeschlossenen letzten Gruppe (46) der anströmseitigen Reihe (44) strömt.

15. Aufdachklimaanlage für ein Straßenfahrzeug,
mit einer Verdampfereinheit (5) nach einem der vorstehenden Ansprüche, deren Verdampfer (12) in einen Kältekreis eingebunden sind.

## Claims

1. Evaporator unit for a rooftop air conditioning system (2) of a road vehicle (1),
- having housing (9) in which two evaporators (12) are disposed, each comprising evaporation tubes (24) extending parallel to one another and parallel to a Z-axis (Z) of the evaporator (12), one distributor and collector box (25) parallel to an X-axis (X) of the evaporator (12) and one diversion box (26) extending parallel to the X-axis (X) of the evaporator (12),
- wherein the evaporation tubes (24) extend from the distributor and collector box (25) to the diversion box (26),
- wherein the distributor and collector box (25) has an inlet connection (30) for liquid refrigerant and an outlet connection (31) for gaseous refrigerant that are disposed side by side on the same end face (32) of the distributor and collector box (25) and in a Y-axis (Y) of the evaporator (12),
- wherein the two evaporators (12) on both sides of a suction chamber (15) of the evaporator unit (5) and in a transverse axis (Q) of the evaporator unit (5) are disposed opposite one another,
- wherein the two evaporators (12) are identical in design,
**characterised in that**,
the two evaporators (12) are disposed facing one another around a longitudinal axis (L) of the evaporator unit (5) so that the inlet connections (30) and the outlet connections (31) of the two evaporators (12) with respect to a vertical axis (H) of the evaporator unit (5) are located on different ends of the evaporator (12) and with respect to the longitudinal axis (L) on the same end of the evaporator (12).

2. Evaporator unit according to claim 1,
**characterised in that**,
each evaporator (12) has a separate expansion valve (34), by which the liquid connection (36) is connected via an inlet line (37) to the inlet connection (30) of the respective evaporator (12) and its gas connection (38) is connected to the outlet connection (31) of the respective evaporator (12) via an outlet line (39).

3. Evaporator unit according to claim 2,
**characterised in that**,
- the respective expansion valve (34) with respect to the Z-axis (Z) of the respective evaporator (12) is disposed substantially centrally, and/or
- the respective expansion valve (34) projects in the transverse axis (Q) via the associated evaporator (12) exclusively at an inflow side facing the intake chamber (15).

4. Evaporator unit according to claim 3,
**characterised in that**,
on the respective evaporator (12) the inlet line (37) and the outlet line (39) extend inclined relative to the Z-axis (Z) of the respective evaporator (12), wherein the inlet line (37) and the outlet line (39) can be inclined relative to the Z-axis (Z) of the respective evaporator (12), so that the associated expansion valve (34) is disposed offset on the respective evaporator (12) in the direction of the upstream side of the respective evaporator (12).

5. Evaporator unit according to any of claims 2 to 4,
**characterised in that**,
the respective expansion valve (34) with its longitudinal axis (43) is aligned substantially parallel to the transverse direction (Q).

6. Evaporator unit according to claim 1,
**characterised in that**,
a common expansion valve (34) is provided for both evaporators (12), by which the liquid connection (36) is connected to the inlet connections (30) of the two evaporators (12) via inlet lines (37) and in which the gas connection (38) is provided via outlet lines (39) connected to the outlet connections (31) of the two evaporators (12).

7. Evaporator unit according to any of claims 2 to 6,
**characterised in that**,
- the respective expansion valve (34) has a control head (42) that with, respect to a longitudinal direction (43) of the expansion valve (34), is disposed end-to-end to the valve housing (35) of the expansion valve (34)
- that the liquid connection (36) and the gas connection (38) are disposed, in the longitudinal direction (43) of the expansion valve (34), side by side on the valve housing (35),
- that the respective expansion valve (34) with its longitudinal direction (43) is inclined by maximum 90° with respect to the vertical axis (H) of the evaporator unit (5).

8. Evaporator unit according to any of claims 2 to 7,
**characterised in that**,
the inlet line (37) and the outlet line (39) are made of metal and the expansion valve (34) is positioned relative to the respective evaporator (12).

9. Evaporator unit according to any one of the preceding claims,
**characterised in that**,
the evaporators (12) are disposed rotationally around the longitudinal axis (L) by approximately 180° with respect to one another.

10. Evaporator unit according to any one of the preceding claims,
**characterised in that**,
the evaporators (12) are disposed with their Z-axis (Z) respectively aligned approximately parallel to the vertical axis (H).

11. Evaporator unit according to any of claims 1 to 10,
**characterised in that**,
the evaporators (12) are disposed with their X-axis (X) respectively inclined to the longitudinal axis (L).

12. Evaporator unit according to any of claims 1 to 11,
**characterised in that**,
- the respective evaporator (12) has an upstream row (44) of evaporation tubes (24) disposed side by side in the X-axis (X) and a downstream row (45) of evaporation tubes (24) disposed side by side in the X-axis (X),
- the upstream-side row (44) and the downstream-side row (45) are juxtaposed in the Y-axis (Y),
- the upstream-side row (44) faces the suction chamber (15), while the downstream-side row (45) faces away from the suction chamber (15).

13. Evaporator unit according to claim 12,
**characterised in that**,
the downstream-side row (45) is connected to the inlet connection (30) while the upstream-side row (44) is connected to the outlet connection (31).

14. Evaporator unit according to any of the claim 12 or 13,
**characterised in that**,
- the upstream-side row (44) and the downstream-side row (45) in the X-axis (X) are respectively subdivided into at least two groups (46), respectively having a plurality of evaporation tubes (24) disposed side by side in the X-axis (X),
- the groups (46) with the aid of chambers (27) formed inside the distributor and collector box (25) and inside the diversion box (26) are interconnected in such a way that the refrigerant first flows within the downstream-side row (45) from the first group (46) of the downstream row (45) connected to the inlet connection (30) to the last group (46) of the downstream-side row (45) and then within the upstream-side row (44) from the first group (46) of the upstream side (44) to the last group (46) of the upstream-side row (44) connected to the outlet connection (31).

15. Rooftop air conditioning system for a road vehicle, having an evaporator unit (5) according to any one of the preceding claims, the evaporator (12) of which is integrated in a refrigeration circuit.

## Revendications

1. Unité d'évaporateur pour une installation de climatisation sur toit (2) d'un véhicule routier (1),
- avec un boîtier (9) dans lequel deux évaporateurs (12) sont agencés, lesquels présentent respectivement plusieurs tubes d'évaporation (24) s'étendant parallèlement les uns aux autres et parallèlement à un axe Z (Z) de l'évaporateur (12), une caisse de distribution et de collecte (25) s'étendant parallèlement à un axe X (X) de l'évaporateur (12) et une caisse de renvoi (26) s'étendant parallèlement à l'axe X (X) de l'évaporateur (12),
- dans laquelle les tubes d'évaporation (24) s'étendent de la caisse de distribution et de collecte (25) à la caisse de renvoi (26),
- dans laquelle la caisse de distribution et de collecte (25) présente un raccord d'entrée (30) pour un réfrigérant liquide et un raccord de sortie (31) pour un réfrigérant gazeux qui sont agencés l'un à côté de l'autre sur le même côté frontal (32) de la caisse de distribution et de collecte (25) et dans un axe Y (Y) de l'évaporateur (12),
- dans laquelle les deux évaporateurs (12) sont agencés de part et d'autre d'un espace d'aspiration (15) de l'unité d'évaporateur (5) et à l'opposé dans un axe transversal (Q) de l'unité d'évaporateur (5),
- dans laquelle les deux évaporateurs (12) sont configurés de manière identique,
**caractérisée en ce que**
les deux évaporateurs (12) sont agencés en étant tournés l'un vers l'autre autour d'un axe longitudinal (L) de l'unité d'évaporateur (5) de sorte que les raccords d'entrée (30) et les raccords de sortie (31) des deux évaporateurs (12) se trouvent par rapport à un axe vertical (H) de l'unité d'évaporateur (5) sur différentes extrémités de l'évaporateur (12) et par rapport à l'axe longitudinal (L) sur la même extrémité de l'évaporateur (12).

2. Unité d'évaporateur selon la revendication 1,
**caractérisée en ce que**
chaque évaporateur (12) présente une soupape de détente (34) séparée, dont le raccord liquide (36) est raccordé par le biais d'une conduite d'entrée (37) au raccord d'entrée (30) de l'évaporateur (12) respectif et dont le raccord gazeux (38) est raccordé par le biais d'une conduite de sortie (39) au raccord de sortie (31) de l'évaporateur (12) respectif.

3. Unité d'évaporateur selon la revendication 2,
**caractérisée en ce que**
- la soupape de détente (34) respective est agencée sensiblement au milieu par rapport à l'axe Z (Z) de l'évaporateur (12) respectif, et/ou
- la soupape de détente (34) respective dépasse dans l'axe transversal (Q) de l'évaporateur afférent (12) exclusivement sur un côté d'afflux tourné vers l'espace d'aspiration (15).

4. Unité d'évaporateur selon la revendication 3,
**caractérisée en ce que**
sur l'évaporateur (12) respectif la conduite d'entrée (37) et la conduite de sortie (39) s'étendent inclinées par rapport à l'axe Z (Z) de l'évaporateur (12) respectif, dans laquelle la conduite d'entrée (37) et la conduite de sortie (39) peuvent être inclinées par rapport à l'axe Z (Z) de l'évaporateur respectif (12) de sorte que la soupape de détente (34) respective soit agencée en déport sur l'évaporateur (12) respectif en direction du côté d'afflux de l'évaporateur respectif (12).

5. Unité d'évaporateur selon l'une quelconque des revendications 2 à 4, **caractérisée en ce que**
la soupape de détente (34) respective est orientée avec son axe longitudinal (43) sensiblement parallèlement au sens transversal (Q).

6. Unité d'évaporateur selon la revendication 1,
**caractérisée en ce que**
pour les deux évaporateurs (12) une soupape de détente (34) commune est prévue, dont le raccord liquide (36) est raccordé par le biais de conduites d'entrée (37) aux raccords d'entrée (30) des deux évaporateurs (12) et dont le raccord gazeux (38) est raccordé par le biais de conduites de sortie (39) aux raccords de sortie (31) des deux évaporateurs (12).

7. Unité d'évaporateur selon l'une quelconque des revendications 2 à 6, **caractérisée en ce que**
- la soupape de détente (34) respective présente une tête de commande (42) qui est agencée par rapport à un sens longitudinal (43) de la soupape de détente (34) côté avant sur un boîtier de soupape (35) de la soupape de détente (34),
- le raccord liquide (36) et le raccord gazeux (38) sont agencés dans le sens longitudinal (43) de la soupape de détente (34) l'un à côté de l'autre sur le boîtier de soupape (35),
- la soupape de détente (34) respective est agencée inclinée avec son sens longitudinal (43) de maximum 90° par rapport à l'axe vertical (H) de l'unité d'évaporateur (5).

8. Unité d'évaporateur selon l'une quelconque des revendications 2 à 7, **caractérisée en ce**
**que** la conduite d'entrée (37) et la conduite de sortie (39) se composent de métal et la soupape de détente (34) se positionne par rapport à l'évaporateur (12) respectif.

9. Unité d'évaporateur selon l'une quelconque des revendications précédentes, **caractérisée en ce**
**que** les évaporateurs (12) sont agencés tournés l'un vers l'autre autour de l'axe longitudinal (L) d'environ 180°.

10. Unité d'évaporateur selon l'une quelconque des revendications précédentes, **caractérisée en ce**
**que** les évaporateurs (12) sont agencés orientés avec leur axe Z (Z) respectivement à peu près parallèlement à l'axe vertical (H).

11. Unité d'évaporateur selon l'une quelconque des revendications 1 à 10, **caractérisée en ce**
**que** les évaporateurs (12) sont agencés avec leur axe X (X) respectivement inclinés par rapport à l'axe longitudinal (L).

12. Unité d'évaporateur selon l'une quelconque des revendications 1 à 11, **caractérisée en ce que**
- l'évaporateur (12) respectif présente une rangée côté afflux (44) de tubes d'évaporation (24) agencés les uns à côté des autres dans l'axe X (X) et une rangée côté sortie (45) de tubes d'évaporation (24) agencés dans l'axe X (X) les uns à côté des autres,
- la rangée côté afflux (44) et la rangée côté sortie (45) sont agencées l'une à côté de l'autre dans l'axe Y (Y),
- la rangée côté afflux (44) est tournée vers l'espace d'aspiration (15) alors que la rangée côté sortie (45) est éloignée de l'espace d'aspiration (15).

13. Unité d'évaporateur selon la revendication 12,
**caractérisée en ce que**
la rangée côté sortie (45) est raccordée au raccord d'entrée (30) alors que la rangée côté afflux (44) est raccordée au raccord de sortie (31).

14. Unité d'évaporateur selon la revendication 12 ou 13,
**caractérisée en ce que**
- la rangée côté afflux (44) et la rangée côté sortie (45) sont divisées dans l'axe X (X) respectivement en au moins deux groupes (46) qui présentent respectivement plusieurs tubes d'évaporation (24) agencés les uns à côté des autres dans l'axe X (X),
- les groupes (46) sont interconnectés entre eux à l'aide de chambres (27) réalisées dans la caisse de distribution et de collecte (25) et dans la caisse de renvoi (26), de sorte que le réfrigérant s'écoule tout d'abord dans la rangée côté sortie (45) du premier groupe (46) raccordé au raccord d'entrée (30) de la rangée côté sortie (45) jusqu'au dernier groupe (46) de la rangée (45) côté sortie et s'écoule dans la rangée côté afflux (44) du premier groupe (46) de la rangée côté afflux (44) jusqu'au dernier groupe (46) raccordé au raccord de sortie (31) de la rangée côté afflux (44).

15. Installation de climatisation sur toit pour un véhicule routier,
avec une unité d'évaporateur (5) selon l'une quelconque des revendications précédentes, dont les évaporateurs (12) sont intégrés dans un circuit de réfrigérant.
